(19) **Europäisches Patentamt European Patent Office Office européen des brevets**

(11) **EP 3 980 588 B1**

(12) **EUROPEAN PATENT SPECIFICATION**

(45) Date of publication and mention of the grant of the patent:
**09.10.2024 Bulletin 2024/41**

(21) Application number: **20726419.3**

(22) Date of filing: **18.05.2020**

(51) International Patent Classification (IPC):
**D01F 6/06** *(2006.01)*        **C08F 110/06** *(2006.01)*

(52) Cooperative Patent Classification (CPC):
(C-Sets available)
**D01F 6/06;** C08F 110/06          (Cont.)

(86) International application number:
**PCT/EP2020/063778**

(87) International publication number:
**WO 2020/244912 (10.12.2020 Gazette 2020/50)**

(54) **PROPYLENE POLYMER FIBERS**

PROPYLENPOLYMERFASERN

FIBRES EN POLYMÈRE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2019 EP 19179084**

(43) Date of publication of application:
**13.04.2022 Bulletin 2022/15**

(73) Proprietor: **Basell Poliolefine Italia S.r.l.**
**20121 Milano (IT)**

(72) Inventors:
- **DE PALO, Roberto**
  **44122 Ferrara (IT)**
- **MARTI PORQUERES, Jaume**
  **43206 Reus (ES)**
- **LEMAIRE, Renaud**
  **1090 Brussels (BE)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 631 269          EP-A1- 2 679 631**
**WO-A1-2014/001425     WO-A1-2017/118612**
**WO-A1-2018/104388     WO-A1-2018/167304**
**WO-A1-2018/211079**

(52) Cooperative Patent Classification (CPC): (Cont.)

C-Sets
**C08F 110/06, C08F 4/6492;**
**C08F 110/06, C08F 4/651;**
**C08F 110/06, C08F 4/6574;**
C08F 110/06, C08F 2500/12, C08F 2500/35,
C08F 2500/34

**Description**

FIELD OF THE INVENTION

The present disclosure relates to the use of polypropylene homopolymer for fibers. Wherein the propylene homopolymer has particular features so that is possible to obtained fibers with low fumes and the resulting fibers shows an increased tenacity.

BACKGROUND OF THE INVENTION

Polypropylene has been since long extruded into fibers. International patent application WO95/032091, for example, discloses fibers comprising a homo or copolymer of propylene having a melting point in the range from 100°C to 145°.

Despite polypropylene fibers have been known for decades, there is still a wish to improve their properties. Also, due to recent regulatory restrictions on phthalates, it is desirable to make available polypropylene fibers that are free from phthalate residues coming from typical Ziegler-Natta catalysts used for their preparation.

EP 2679631 relates to a propylene homopolymer having among other features a MFR ranging from 3.0 to 8.0 dg/min, - a content of the xylene soluble fraction in the range from 1.5 wt% to 3.5 wt%, a polydispersity index of at least 3.0 and of at most 5.0.

WO 2018/211079 relates to fibers comprising a polypropylene having a melt flow index in the range from 0.1 to 4.9 g/10 min; a xylene soluble fraction of at most 0.8 wt%, a molecular weight distribution Mw/Mn ranging from 2.0 to 5.0; and a melting temperature Tm of at most 155 °C.

WO 2018/167304 relates to Spun and drawn fibres comprising a polypropylene composition of a polypropylene homopolymer, the spun and drawn fibres having an average MFI of 1 to 5 g/10 min and a xylene soluble content in the range from 1 wt% to 4.5 wt% or 1.5 wt% to 4.5 wt%.

WO 2017 001425 1. relates to a propylene homopolymer comprising at least two propylene homopolymer fractions of different melt flow index, being characterized by a melt flow index in the range from 3.0 to 8.0 dg/min, a xylene solubles content in the range from 1.5 wt% to 3.5 wt%, a tacticity in the range from 97.0 % to 99.0 % of mmmm pentads (determined on the insoluble heptane fraction of the xylene insolubles fraction), and - a recovery compliance in the range from 4.0 • 10-4 Pa-1 to 5.5 • 10-4 P a -1. None of these documents disclose all the features of the present invention.

WO2017/118612 relates to a spunbonded nonwoven fabric comprising a polypropylene homopolymer having: a melt flow rate (MFR, 230°C, 2.16 kg, ISO 1133) of 15 to 120 g/1 O min, a molecular weight distribution (Mw/Mn) > 4.3, a melting temperature of 150-164°C and being free of phthalic acid esters as well as their respective decomposition products;

the XCS is in the range of 2.5-5.5 wt.-%.

However this document is silent about acetone insolubles.

EP 2631269 relates to a polypropylene composition comprising:

a polypropylene (L-PP) homopolymer having:

    a melt flow rate of 0.5-10 g/10min
    a melting temperature Tm of 155-165°C,
    a xylene cold soluble content (XCS) of 0.1-3.5 wt.-% and a polydispersity index (PI) of preferably 3.5-6.5.
    b) a polypropylene (H-PP) having a melt flow rate of 200-2,500 g/10 min.

However this document is silent about acetone insolubles.

WO 2018/104388 relates to a polypropylene homopolymer PP2 having: a melt flow rate of 2.7 g/10min, a melting temperature Tm of 162°C, a xylene cold soluble content (XCS) of 3.5 wt.-% and a polydispersity index (PI) of 6.5.

However this document is silent about acetone insolubles.

SUMMARY OF THE INVENTION

The applicant found that fiber with good tenacity can be obtained by using a propylene homopolymer having a particular distribution of molecular weight of xylene soluble fraction.

Thus, the present disclosure is directed to the use of a propylene homopolymer for producing fibers; wherein the propylene homopolymer is characterized in that:

-   the melting point ranges from 150°C to 164°C;
-   the fraction soluble in xylene at 25°C is comprised between 6.0 wt% and 2.0 wt%;

- the fraction soluble in acetone 25°C is comprised between 0.5 wt% and 2.0 wt%
- the ratio fraction soluble in acetone at 25°C/ fraction insoluble in acetone 25°C is comprised between 0.30 and 0.60.
- the polydispersity index ranges from 2.8 to 4.5
- the melt flow rate (ISO 1133, 230 °C/2.16 kg) is comprised between 2 to 40 g/10min.

wherein the melting point is measured by using the DSC with heating and cooling rate of 20°C/min;
the fraction soluble in xylene at 25°C is measured according to ISO 16 152 - 2005; with solution volume of 250 ml, precipitation at 25°C for 20 minutes, 10 of which with the solution in agitation (magnetic stirrer), and drying at 70°; the fraction soluble and unsoluble in acetone at 25°C is measured on a second aliquot of the filtered solution obtained according to the method for the determination of xylene soluble fraction at 25°C; this second aliquot is added with acetone (100 ml) so that the precipitation of the amorphous part takes place; then the suspension is filtered on a Teflon membrane coupled with a steel frit on a flask, dried in an oven at 80°C overnight and weighed so that the soluble and insoluble fraction can be determined.

## DETAILED DESCRIPTION OF THE INVENTION

Thus, the present disclosure is directed to the use of a propylene homopolymer for producing fibers; wherein the propylene homopolymer is characterized in that:

- the melting point ranges from 150°C to 164°C; preferably from 155°C to 163°C; more preferably from 158°C to 163°C
- the fraction soluble in xylene at 25°C is comprised between 6.0 wt% and 2.0 wt%; preferably between 5.0 wt% and 2.5 wt%; more preferably between 4.5 wt% and 3.0 wt%
- the fraction soluble in acetone 25°C is comprised between 0.5 wt% and 2.0 wt%, preferably is comprised between 0.8 wt% and 1.5 wt%;
- the ratio fraction soluble in acetone at 25°C/ fraction insoluble in acetone 25°C is comprised between 0.30 and 0.60 ; preferably is comprised between 0.35 and 0.55 more preferably is comprised between 0.43 and 0.50
- the polydispersity index ranges from 2.8 to 4.5; preferably ranges from 3.0 to 4.0;
- the melt flow rate (ISO 1133, 230 °C/2.16 kg) is comprised between 2 and 40 g/10min; preferably is comprised between 5 and 20 g/10min; more preferably is comprised between 7 and 15 g/10min;

wherein the melting point is measured by using the DSC with heating and cooling rate of 20° C/min;
the fraction soluble in xylene at 25°C is measured according to ISO 16 152 - 2005; with solution volume of 250 ml, precipitation at 25°C for 20 minutes, 10 of which with the solution in agitation (magnetic stirrer), and drying at 70°; the fraction soluble and unsoluble in acetone at 25°C is measured on a second aliquot of the filtered solution obtained according to the method for the determination of xylene soluble fraction at 25°C; this second aliquot is added with acetone (100 ml) so that the precipitation of the amorphous part takes place; then the suspension is filtered on a Teflon membrane coupled with a steel frit on a flask, dried in an oven at 80°C overnight and weighed so that the soluble and insoluble fraction can be determined.

The polypropylene homopolymer used for the production for the fiber according to the present disclosure has a very low oligomer content this means that it is possible to lower considerably the production of fumes during the production of fibers. The oligomer content is preferably lower than 1500 ppm; preferably lower than 1200 ppm; even more preferably lower than 1000 ppm.

The fibers obtained by using the propylene homopolymer show also an increased tenacity and an improved haptics.

The propylene homopolymers disclosed herein can be prepared by a process comprising polymerizing propylene with ethylene, in the presence of a catalyst comprising the product of the reaction between:

(i) a solid catalyst component comprising Ti, Mg, Cl, and at least one electron donor compound characterized by the fact that it contains from 0.1 to 50%wt of Bi with respect to the total weight of said solid catalyst component; the external donor being preferably esters of glutaric acid, preferably alkyl esters of glutaric acid such as 1 3,3-dipropylglutarate; preferably the ester of glutaric acid are used in mixture with 9,9-bis(alkoxymethyl)fluorene such as 9,9-bis(methoxymethyl)fluorene; the molar ratio between preferably esters of glutaric acid and 9,9-bis(alkoxymethyl)fluorene being from 50:50 to 90:10; preferably from 60:40 to 80:20; more preferably from 65:35 to 75:25; the alkyl radical being C1-C10 alkyl radical such as methyl, ethyl propyl; butyl radicals;1
(ii) an alkylaluminum compound; and
(iii) an external electron-donor compound having the general formula:

$$(R^1)_a Si(OR^2)_b$$

wherein $R^1$ and $R^2$ are independently selected among alkyl radicals with 1-8 carbon atoms, optionally containing heteroatoms, a is 0 or 1, and a+b=4.

Preferably, in the catalyst component the content of Bi ranges from 0.5 to 40%wt, more preferably from 1 to 35%wt, especially from 2 to 25%wt and in a very particular embodiment from 2 to 20%wt.

The particles of the solid component have substantially spherical morphology and an average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5, and preferably lower than 1.3.

In general, the amount of Mg preferably ranges from 8 to 30%wt, more preferably from 10 to 25%wt.

Generally, the amount of Ti ranges from 0.5 to 5%wt, and more preferably from 0.7 to 3%wt.

The Mg/Ti molar ratio is preferably equal to, or higher than, 13, preferably in the range of 14 to 40, and more preferably from 15 to 40. Correspondingly, the Mg/donor molar ratio is preferably higher than 16, more preferably higher than 17 and usually ranging from 18 to 50.

The Bi atoms are preferably derived from one or more Bi compounds not having Bi-carbon bonds. In particular, the Bi compounds can be selected from Bi halides, Bi carbonate, Bi acetate, Bi nitrate, Bi oxide, Bi sulphate, and Bi sulfide. Compounds in which Bi has the valence state of $3^+$ are preferred. Among Bi halides, preferred compounds are Bi trichloride and Bi tribromide. The most preferred Bi compound is $BiCl_3$.

The preparation of the solid catalyst component can be carried out according to several methods.

According to one method, the solid catalyst component can be prepared by reacting a titanium compound of the formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be prepared in spherical form by mixing alcohol and magnesium chloride, operating under stirring conditions at the melting temperature of the adduct (100-130°C). Then, the adduct is mixed with an inert hydrocarbon immiscible with the adduct, thereby creating an emulsion which is quickly quenched, causing the solidification of the adduct in form of spherical particles. Examples of spherical adducts prepared according to this procedure are described in USP 4,399,054 and USP 4,469,648. The resulting adduct can be directly reacted with a Ti compound, or it can be previously subjected to thermally controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or not) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides, and in particular $BiCl_3$. The alkyl-Al compound (ii) is preferably chosen from among the trialkyl aluminum compounds such as, for example, triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in a mixture with the above cited trialkylaluminums. The Al/Ti ratio is higher than 1 and is generally between 50 and 2000.

The external electron donor compound (iii) is a silicon compound having the general formula

$$(R^1)_a Si(OR^2)_b \qquad (II)$$

wherein $R^1$ and $R^2$ are independently selected among alkyl radicals with 1-8 carbon atoms, optionally containing heteroatoms, wherein a is 0 or 1 and a+b=4.

A first group of preferred silicon compounds of formula (II) are those for which a is 1, b is 3 and $R^1$ and $R^2$ are independently selected from among alkyl radicals having 2-6, preferably 2-4, carbon atoms, with isobutyl triethoxysilane (iBTES) being particularly preferred.

A further group of preferred silicon compounds of the formula (II) are those for which a is 0, b is 4, and $R^2$ is independently selected from among alkyl radicals with 2-6, preferably 2-4, carbon atoms, tetraethoxysilane being particularly preferred.

The external electron donor compound (c) is used in such an amount to give a molar ratio between the organoaluminum compound and said external electron donor compound (iii) of from 0.1 to 200, preferably from 1 to 100, and more preferably from 3 to 50.

The polymerization process can be carried out according to known techniques, for example, slurry polymerization using as a diluent an inert hydrocarbon solvent, or bulk polymerization using the liquid monomer (for example, propylene) as a reaction medium. Moreover, it is possible to carry out the polymerization process in gas-phase operating in one or more fluidized or mechanically agitated bed reactors.

The polymerization is generally carried out at temperatures of from 20 to 120°C, preferably of from 40 to 80°C. When the polymerization is carried out in gas-phase, the operating pressure is generally between 0.5 and 5 MPa, preferably between 1 and 4 MPa. In bulk polymerization, the operating pressure is generally between 1 and 8 MPa, preferably between 1.5 and 5 MPa. Hydrogen is typically used as a molecular weight regulator.

The fibers according to the present invention can be stable fibers or spunbond fibers.

When spunboud fibers are needed the propylene homopolymer can be subjected to visbreaking in order to achieve the desired melt flow rate (MFR).. The visbreaking, or controlled chemical degradation can be carried out by treating the precursor polypropylene with appropriate amounts, preferably from 0.001 to 0.20 wt%, more preferably from 0.05 to 0.1 wt%, of free radical initiators according to processes well-known in the art. Preferably, the chemical degradation is carried out by contacting under high shear conditions the polymeric material with at least one free radical initiator at a temperature equal to or higher than the decomposition temperature of the free radical initiator. Preferred free radical initiators are peroxides having a decomposition temperature higher than 250°C preferably ranging from 150° to 250°C, such as di-tert-butyl peroxide, dicumyl peroxide, the 2,5-dimethyl-2,5-di (tert-butylperoxy)hexyne, and 2,5-dimethyl-2,5-di(tert-butylperoxy)hexane (traded by Akzo or Arkema under the name Trigonox 101 or Luperox 101 respectively).

The fibers of the present invention can also contain additives commonly employed in the art, such as antioxidants, light stabilizers, heat stabilizers, nucleating agents, colorants and fillers.

The fibers of the invention typically exhibit a value of tenacity at least equal to or higher than 20.0 cN/tex, preferably higher than 25.. cN/tex, more preferably higher than 26 cN/tex.

Typically, the fibers according to the present invention have a titre ranging from 1 to 8 dtex, preferably from 1.5 to 4.0 dtex.

The fibers of the present invention can be efficiently spun at speeds that are typically higher than 3000 m/min, preferably higher than 3300 m/min, more preferably higher than 3500 m/min.

The fibers of the invention can be spun at temperatures generally varying from 200° to 300° C. Preferably, the spinning temperature is lower than 250°C, even more preferably, the spinning temperature is comprised between 230° and 250°C.

The fibers of the present invention can be used for the manufacture of non-woven fabrics showing excellent properties.

Such non-woven fabrics may be produced with various methods, preferably through the well-known spunbonding technique. The spunbonding process is a non-woven manufacturing technique, whereby polymers are directly converted into endless filaments and stochastically deposited to form a non-woven material.

The following examples are given in order to illustrate, but not limit the present disclosure.

## EXAMPLES

## CHARACTERIZATIONS

### Xylene-insoluble and soluble fraction at 25°C

Xylene Solubles fraction has been measured according to ISO 16 152 - 2005; with solution volume of 250 ml, precipitation at 25°C for 20 minutes, 10 of which with the solution in agitation (magnetic stirrer), and drying at 70°.

### Fraction soluble in acetone at 25°C

A second aliquot of the filtered solution obtained according to the method for the determination of xylene soluble fraction at 25°C is added with acetone (100 ml) so that the precipitation of the amorphous part takes place. Then the suspension is filtered on a Teflon membrane coupled with a steel frit on a flask, dried in an oven at 80°C overnight and weighed so that the soluble and insoluble fraction can be determined.

### Melt Flow Rate (MFR)

Measured according to ISO 1133 at 230°C with a load of 2.16 kg, unless otherwise specified.

- **Titre of filaments**

From a 10 cm long roving, 50 fibers are randomly chosen and weighed. The total weight of the 50 fibers, expressed in mg, is multiplied by 2, thereby obtaining the titre in dtex.

- **Tenacity and Elongation at break of filaments**

From a 500 m roving a 100 mm-long segment is cut and single fibers randomly chosen. Each single fiber is fixed to the clamps of a Dynamometer and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined in machine (MD) direction.

The tenacity is calculated by way of the following equation:

$$\text{Tenacity} = \text{Ultimate strength (cN)} \times 10/\text{Titre (dtex)}.$$

**Maximum spinning speed**

The maximum spinning speed gives indication of the spinnability of the propylene polymer composition of the invention. The value corresponds to the highest spinning rate that can be maintained for 30 minutes with no filament break

Softness haptics

Softness index is a conventional measure of flexibility of fibers, calculated as weight [1/g] of a bundle, whose length is determined in standard conditions. Softness values, so obtained, are in excellent agreement with the results of the empirical tests on non-woven. The apparatuses used for such analysis are the following:

- Twist measuring device (Torcimetro by Negri e Bossi Spa)
- Analytical balance (by Mettler)
- Softness tester (by Clark).

The sample is prepared by providing a fiber bundle of about 4,000 dtex in linear density and 0.6 m in length. The ends of the bundle are fixed on the clamps of the twist measuring device and a 120 leftward twist runs is applied. The twisted bundle is taken off from the device (carefully avoiding any untwisting). The two ends of the twisted bundle are taken in the same side and the halves winded around each other until the bundle assumes the stable form of a cord. Three specimens of each test at least are prepared. The bundle is bended in two and the ends fixed between the rolls of the Clark softness tester, leaving a distance of 1 cm between the two halves. The plane of the device is rotated rightward and stopped, when the bundle reverses its bending direction, taking note of the rotation angle (a). Subsequently the plane rotated leftward and again stopped, when the bundle reverses its bending side. Take note of the rotation angle (b). The height of the bundle above the two rolls is adjusted so to have the sum a $\pm$ b equal to 90° +/- 1° and this height is measured with a proper device (sensitivity 1 mm). Each of the two angles, a and b, should not exceed the limits of 45° +/- 15°. The bundle is taken off from the device and cut to an height corresponding to that previously measured. The cut bundle is weighed by an analytical balance with a precision of 0.1 mg. The Softness index can be calculated from: S.I. = (1/W) * 100, in which W is the weight, in grams, of the cut bundle. The final result is the average of the 3 samples. The sensitivity in measuring the bundle weight is 0.1 mg

**Melting temperature via Differential Scanning Calorimetry (DSC)**

The melting points of the polymers (Tm) were measured by differential scanning calorimetry (DSC) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 $\pm$ 0.5 mg. In order to obtain the melting point, the weighted sample was sealed into aluminium pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tp,m) was taken as the melting temperature.

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

### Determination of Bi

The determination of Bi content in the solid catalyst component has been carried out via inductively coupled plasma emission spectroscopy on an "I.C.P Spectrometer ARL Accuris". The sample was prepared by analytically weighting in a 200 $cm^3$ volumetric flask 0.1-0.3 grams of catalyst. After the slow addition of both ca. 10 milliliters of 65% v/v HNOs solution and ca. 50 $cm^3$ of distilled water, the sample undergoes a digestion for 4-6 hours. Then the volumetric flask is diluted to the mark with deionized water. The resulting solution is directly analyzed via ICP at the following wavelength: bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present in the starting catalyst compound.

### Oligomer content

The determination of oligomer content by solvent extraction consists of treating 5g of polypropylene sample with 10 ml of methylenedichloride ($CH_2Cl_2$) in an ultrasonic bath at 25°C for 4 hours. 1 µl of the extracted solution is injected into a capillary column and analysed by using FID, without any filtration. For quantitative estimation of oligomer content a calibration based on external standard method has been applied. In particular, a series of hydrocarbons (C12-C22-C28-C40) is used.

### Examples 1 - Preparation of homopolymer

### Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in an amount of 3 mol% with respect to the magnesium is added before the feeding of the oil.

### Procedure for the preparation of the solid catalyst component

Into a 500 ml round bottom flask, equipped with mechanical stirrer, cooler and thermometer, 300 ml of $TiCl_4$ were introduced at room temperature under a nitrogen atmosphere. After cooling to 0°C, 9.0 g of the spherical adduct (prepared as described above) were added while stirring, then diethyl 3,3-dipropylglutarate was sequentially added into the flask. The amount of charged internal donor was such to meet a Mg/donor molar ratio of 13. The temperature was raised to 100°C and maintained for 2 hours. Thereafter, stirring was stopped, the solid product was allowed to settle and the supernatant liquid was siphoned off at 100°C.

After siphoning, fresh $TiCl_4$ and an amount of 9,9-bis(methoxymethyl)fluorene for producing a Mg/diether molar ratio of 13 was added. The mixture was then heated at 120°C and kept at this temperature for 1 hour under stirring. Stirring was stopped again, the solid was allowed to settle and the supernatant liquid was siphoned off. The solid was washed with anhydrous hexane six times in a temperature gradient down to 60°C and one time at room temperature. The obtained solid was then dried under vacuum and analyzed.

### Prepolymerization treatment

Before introducing it into the polymerization reactors, the solid catalyst component described above is contacted with triethyl aluminum (TEAL) and isobutyl-trietoxysilane (iBTES) as described in Table 1.

**Polymerization**

The polymerization run was carried out in continuous mode in a liquid phase loop reactor. Hydrogen was used as a molecular weight regulator. Polymerization conditions are indicated in table 1.

**Comparative example 2**

Comparative example 2 has been carried out as in example 1 with the exception that 9,9-bis(methoxymethyl)fluorene has been used instead of diethyl 3,3-dipropylglutarate in an equivalent molar amount so that the catalyst contains the same total molar amount 1 of internal donors of the catalyst of example 1.

. Polymerizatiocn conditions are indicated in table 1

Thereafter the polymer particles are mixed with a usual stabilizing additive composition in a twin screw extruder Berstorff ZE 25 (length/diameter ratio of screws: 34) and extruded under nitrogen atmosphere in the following conditions:

Rotation speed:     250 rpm;
Extruder output:    15 kg/hour;
Melt temperature:   245 °C.

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2.

Table 1 - Polymerization conditions

|  | Ex 1 | Comparative example 2 |
|---|---|---|
| TEAL/catalys (wt ratio) | 5.7 | 6.0 |
| TEAL/ext donor (wt ratio) | 606 | 600 |
| Temperature °C | 75 | 75 |
| Pressure barg | 28.0 | 28.0 |
| $H_2/C_3$-mol/mol | 0.0057 | 0.0042 |
| Notes: C3- = propylene. | | |

The features of the polymer of examples 1 and comparative example 2 are reported on table 2

Table 2

| Example |  | 1 | Comp 2 | Comp 3 |
|---|---|---|---|---|
|  |  |  |  |  |
| Xylene solubles | wt% | 3.7 | 2.9 | 3.8 |
| Oil fraction (acetone solubles) | Wt% | 1.2 | 1.5 | 1.7 |
| Acetone unsolubles | wt% | 2.5 | 1.4 | 2.1 |

(continued)

| Example | | 1 | Comp 2 | Comp 3 |
|---|---|---|---|---|
| Ratio acetone solubles/unsolubles | | 0.48 | 1.07 | 0.81 |
| MFR | g/10 min | 10.3 | 15.4 | 12.2 |
| Oligomer content | ppm | 850 | 1640 | 1820 |
| Tm | °C | 160.9 | 161.6 | 161.3 |
| polydispersity | | 3.4 | 3.5 | 3.5 |

Comparative example 3 is HP2619, a propylene homopolymer for fibers sold by LyondellBasell

Preparation of the fibers

The polymers are extruded in a Leonard 25 spinning pilot line with screw LID ratio of 5. The line is marketed by Costruzioni Meccaniche Leonard-Sumirago (VA). The operative spinning conditions are here reported.
Operative conditions:

- Hole diameter: mm 0.4
- Hole number in the die: 41
- Die temperature (°C): 280
-

The properties of the filaments are reported on Table 3.

Table 3

| | | Example 1 | Comparative ex 2 | Comparative ex 3 |
|---|---|---|---|---|
| Maximum spinning speed | m/min | 4200 | 3900 | 4200 |
| Fiber titre | dTex | 1,75 | 1,75 | 1,75 |
| Tenacity | cN/Tex | 25,6 | 24,6 | 23 |
| Elongation at break | % | 415 | 400 | 390 |
| | m/min | 2250 | 2250 | 2250 |
| Max spining speed | m/min | 4200 | 3900 | 4200 |
| | | | | |

During the spinning process fuming generated from the homopolymer of example 1 were negligible with respect to fumes generated from the homopolymer of comparative examples 2 and 3.
Furthermore the resulting fibers of example 1 are better in elongation at break and tenacity.

**Claims**

1.  The use of a propylene homopolymer for producing fibers; wherein the propylene homopolymer is **characterized in that**:

    - the melting point ranges from 150°C to 164°C;
    - the fraction soluble in xylene at 25°C is comprised between 6.0 wt% and 2.0 wt%;
    - the fraction soluble in acetone 25°C is comprised between 0.5 wt% and 2.0 wt%
    - the ratio fraction soluble in acetone at 25°C/ fraction insoluble in acetone 25°C is comprised between 0.30 and 0.60.
    - the polydispersity index ranges from 2.8 to 4.5
    - the melt flow rate (ISO 1133, 230 °C/2.16 kg) is comprised between 2 to 40 g/10min;

wherein the melting point is measured by using the DSC with heating and cooling rate of 20°C/min;

the fraction soluble in xylene at 25°C is measured according to ISO 16 152 - 2005; with solution volume of 250 ml, precipitation at 25°C for 20 minutes, 10 of which with the solution in agitation (magnetic stirrer), and drying at 70°;

the fraction soluble and insoluble in acetone at 25°C is measured on a second aliquot of the filtered solution obtained according to the method for the determination of xylene soluble fraction at 25°C; this second aliquot is added with acetone (100 ml) so that the precipitation of the amorphous part takes place; then the suspension is filtered on a Teflon membrane coupled with a steel frit on a flask, dried in an oven at 80°C overnight and weighed so that the soluble and insoluble fraction can be determined.

2. The use of a propylene homopolymer for producing fibers according to claim 1 ; wherein the melting point of the propylene homopolymer ranges from 155°C to 163°C.

3. The use of a propylene homopolymer for producing fibers according to claims 1 or 2 ;
wherein the fraction soluble in xylene at 25°C is comprised between 5.0 wt% and 2.5 wt%.

4. The use of a propylene homopolymer for producing fibers according to anyone of claims 1-3 wherein the fraction soluble in xylene at 25°C is comprised between 4.5 wt% and 3.0 wt%.

5. The use of a propylene homopolymer for producing fibers according to anyone of claims 1-4 wherein in the propylene homopolymer the fraction soluble in acetone 25°C is comprised between 0.8 wt% and 1.5 wt%.

6. The use of a propylene homopolymer for producing fibers according to anyone of claims 1-5 wherein in the propylene homopolymer the ratio fraction soluble in acetone at 25°C/ fraction insoluble in acetone 25°C is comprised between 0.35 and 0.55 wt%.

7. The use of a propylene homopolymer for producing fibers according to anyone of claims 1-6 wherein in the propylene homopolymer the ratio fraction soluble in acetone at 25°C/ fraction insoluble in acetone 25°C is comprised between 0.43 wt% and 0.50 wt%.

8. The use of a propylene homopolymer for producing fibers according to anyone of claims 1-7 wherein in the propylene homopolymer the polydispersity index ranges from 3.0 to 4.0.

9. The use of a propylene homopolymer for producing fibers according to anyone of claims 1-8 wherein in the propylene homopolymer the melt flow rate (ISO 1133, 230 °C/2.16 kg) is comprised between 5.0 and 20.0 g/10min.

10. The use of a propylene homopolymer for producing fibers according to anyone of claims 1-8 wherein in the propylene homopolymer the melt flow rate (ISO 1133, 230 °C/2.16 kg) is comprised between 7.0 and 15.0 g/10min.

**Patentansprüche**

1. Verwendung eines Propylenhomopolymers zur Produktion von Fasern; wobei das Propylenhomopolymer **dadurch gekennzeichnet ist, dass**:

- der Schmelzpunkt im Bereich von 150 °C bis 164 °C liegt;
- die in Xylol bei 25 °C lösliche Fraktion zwischen 6,0 Gew.% und 2,0 Gew.% liegt;
- die in Aceton bei 25 °C lösliche Fraktion zwischen 0,5 Gew.% und 2,0 Gew.% liegt;
- das Verhältnis der in Aceton bei 25 °C löslichen Fraktion zu der in Aceton bei 25 °C unlöslichen Fraktion zwischen 0,30 und 0,60 liegt;
- der Polydispersitätsindex im Bereich von 2,8 bis 4,5 liegt;
- die Schmelzflussrate (ISO 1133, 230 °C/2,16 kg) zwischen 2 und 40 g/10 min liegt;
wobei der Schmelzpunkt unter Verwendung der DSC mit Heiz- und Kühlraten von 20 °C/min gemessen wird;
die in Xylol bei 25 °C lösliche Fraktion gemäß ISO 16 152 - 2005 gemessen wird; mit Lösungsvolumen von 250 ml, Ausfällung bei 25 °C für 20 Minuten, davon 10 mit der Lösung in Bewegung (Magnetrührer), und Trocknen bei 70°;
die bei 25 °C in Aceton lösliche Fraktion und in Aceton unlösliche Fraktion an einer zweiten Aliquoten der filtrierten Lösung gemessen werden, die gemäß dem Verfahren zur Bestimmung der in Xylol bei 25 °C löslichen Fraktion erhalten wurde; wobei dieser zweiten Aliquote Aceton (100 ml) zugegeben wird, so dass die Ausfällung des amorphen Teils stattfindet; wobei die Suspension dann auf einer Teflon-Membran, die mit einer Stahlfritte auf einem Kolben gekoppelt ist, filtriert wird, in einem Ofen bei 80 °C über Nacht getrocknet und gewogen wird, so dass die lösliche Fraktion und die unlösliche Fraktion bestimmt werden können.

2. Verwendung eines Propylenhomopolymers zur Produktion von Fasern nach Anspruch 1, wobei der Schmelzpunkt des Propylenhomopolymers im Bereich von 155 °C bis 163 °C liegt.

3. Verwendung eines Propylenhomopolymers zur Produktion von Fasern nach den Ansprüchen 1 oder 2, wobei die in Xylol bei 25 °C lösliche Fraktion zwischen 5,0 Gew.% und 2,5 Gew.% liegt.

4. Verwendung eines Propylenhomopolymers zur Produktion von Fasern nach einem der Ansprüche 1 bis 3, wobei die in Xylol bei 25 °C lösliche Fraktion zwischen 4,5 Gew.% und 3,0 Gew.% liegt.

5. Verwendung eines Propylenhomopolymers zur Produktion von Fasern nach einem der Ansprüche 1 bis 4, wobei in dem Propylenhomopolymer die in Aceton bei 25 °C lösliche Fraktion zwischen 0,8 Gew.% und 1,5 Gew.% liegt.

6. Verwendung eines Propylenhomopolymers zur Produktion von Fasern nach einem der Ansprüche 1 bis 5, wobei in dem Propylenhomopolymer das Verhältnis der in Aceton bei 25 °C löslichen Fraktion zu der in Aceton bei 25 °C unlöslichen Fraktion zwischen 0,35 und 0,55 Gew.% liegt.

7. Verwendung eines Propylenhomopolymers zur Produktion von Fasern nach einem der Ansprüche 1 bis 6, wobei in dem Propylenhomopolymer das Verhältnis der in Aceton bei 25 °C löslichen Fraktion zu der in Aceton bei 25 °C unlöslichen Fraktion zwischen 0,43 Gew.% und 0,50 Gew.% liegt.

8. Verwendung eines Propylenhomopolymers zur Produktion von Fasern nach einem der Ansprüche 1 bis 7, wobei der Polydispersitätsindex in dem Propylenhomopolymer im Bereich von 3,0 bis 4,0 liegt.

9. Verwendung eines Propylenhomopolymers zur Produktion von Fasern nach einem der Ansprüche 1 bis 8, wobei in dem Propylenhomopolymer die Schmelzflussrate (ISO 1133, 230 °C/2,16 kg) zwischen 5,0 und 20,0 g/10 min liegt.

10. Verwendung eines Propylenhomopolymers zur Produktion von Fasern nach einem der Ansprüche 1 bis 8, wobei in dem Propylenhomopolymer die Schmelzflussrate (ISO 1133, 230 °C/2,16 kg) zwischen 7,0 und 15,0 g/10 min liegt.

**Revendications**

1. Utilisation d'un homopolymère de propylène pour la production de fibres ;
   l'homopolymère de propylène étant **caractérisé en ce que** :

   - le point de fusion est situé dans la plage de 150 °C à 164 °C ;
   - la fraction soluble dans le xylène à 25 °C est située entre 6,0 % en poids et 2,0 % en poids ;
   - la fraction soluble dans l'acétone à 25 °C est située entre 0,5 % en poids et 2,0 % en poids ;
   - le rapport fraction soluble dans l'acétone à 25 °C/fraction insoluble dans l'acétone à 25 °C est situé entre 0,30 et 0,60 ;
   - l'indice de polydispersité est situé dans la plage de 2,8 à 4,5 ;
   - l'indice de fluidité à chaud (ISO 1133, 230 °C/2,16 kg) est situé entre 2 et 40 g/10 min ;
   le point de fusion étant mesuré à l'aide de la calorimétrie différentielle à balayage (DSC) à une vitesse de chauffage et de refroidissement de 20 °C/min ;
   la fraction soluble dans le xylène à 25 °C étant mesurée selon la norme ISO 16 152-2005 ; avec un volume de solution de 250 ml, une précipitation à 25 °C pendant 20 minutes, dont 10 minutes pendant lesquelles la solution est sous agitation (agitateur magnétique), et un séchage à 70° ;
   les fractions soluble et insoluble dans l'acétone à 25 °C étant mesurées sur une deuxième partie aliquote de la solution filtrée obtenue selon le procédé de détermination de la fraction soluble dans le xylène à 25 °C ; cette deuxième partie aliquote étant additionnée d'acétone (100 ml) de sorte que la précipitation de la partie amorphe a lieu; puis la suspension étant filtrée sur une membrane en téflon couplée à une fritte d'acier sur un flacon, séchée dans un four à 80 °C pendant une nuit et pesée de sorte que les fractions soluble et insoluble peuvent être déterminées.

**2.** Utilisation d'un homopolymère de propylène pour la production de fibres selon la revendication 1 ; le point de fusion de l'homopolymère de propylène étant situé dans la plage de 155 °C à 163 °C.

**3.** Utilisation d'un homopolymère de propylène pour la production de fibres selon les revendications 1 ou 2 ; la fraction soluble dans le xylène à 25 °C étant située entre 5,0 % en poids et 2,5 % en poids.

**4.** Utilisation d'un homopolymère de propylène pour la production de fibres selon l'une quelconque des revendications 1 à 3, la fraction soluble dans le xylène à 25 °C étant située entre 4,5 % en poids et 3,0 % en poids.

**5.** Utilisation d'un homopolymère de propylène pour la production de fibres selon l'une quelconque des revendications 1 à 4, où, dans l'homopolymère de propylène, la fraction soluble dans l'acétone à 25 °C est située entre 0,8 % en poids et 1,5 % en poids.

**6.** Utilisation d'un homopolymère de propylène pour la production de fibres selon l'une quelconque des revendications 1 à 5, où, dans l'homopolymère de propylène, le rapport fraction soluble dans l'acétone à 25 °C/fraction insoluble dans l'acétone à 25 °C est situé entre 0,35 et 0,55 % en poids.

**7.** Utilisation d'un homopolymère de propylène pour la production de fibres selon l'une quelconque des revendications 1 à 6, où, dans l'homopolymère de propylène, le rapport fraction soluble dans l'acétone à 25 °C/fraction insoluble dans l'acétone à 25 °C est situé entre 0,43 % en poids et 0,50 % en poids.

**8.** Utilisation d'un homopolymère de propylène pour la production de fibres selon l'une quelconque des revendications 1 à 7, où, dans l'homopolymère de propylène, l'indice de polydispersité est situé dans la plage de 3,0 à 4,0.

**9.** Utilisation d'un homopolymère de propylène pour la production de fibres selon l'une quelconque des revendications 1 à 8, où, dans l'homopolymère de propylène, l'indice de fluidité à chaud (ISO 1133, 230 °C/2,16 kg) est situé entre 5,0 et 20,0 g/10 min.

**10.** Utilisation d'un homopolymère de propylène pour la production de fibres selon l'une quelconque des revendications 1 à 8, où, dans l'homopolymère de propylène, l'indice de fluidité à chaud (ISO 1133, 230 °C/2,16 kg) est situé entre 7,0 et 15,0 g/10 min.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 95032091 A
- EP 2679631 A
- WO 2018211079 A
- WO 2018167304 A
- WO 20170014251 A
- WO 2017118612 A

- EP 2631269 A
- WO 2018104388 A
- US 4399054 A
- US 4469648 A
- WO 9844009 A